# EUROPEAN PATENT APPLICATION

(11) **EP 4 440 030 A1**
(43) Date of publication of application: **02.10.2024**
(21) Application number: 24167576.8
(22) Date of filing: 28.03.2024
(51) Int. Cl.: H04L 9/08

(54) **SECRET SHARING STORAGE SYSTEM, SECRET SHARING STORAGE METHOD, AND SECRET SHARING STORAGE APPARATUS**

(30) Priority: 30.03.2023 JP 2023054496
(71) Applicant: Kabushiki Kaisha Toshiba, Tokyo 105-0023 (JP); Toshiba Digital Solutions Corporation, Kawasaki-shi, Kanagawa 212-0013 (JP)
(72) Inventor: NANJO, Yuki, Tokyo (JP); HANATANI, Yoshikazu, Tokyo (JP); FUJII, Yoshihiro, Kawasaki-shi (JP); MATSUO, Masakatsu, Tokyo, 100-0005 (JP); MUTO, Koji, Tokyo, 100-0005 (JP); SHINYA, Takuma, Tokyo, 100-0005 (JP)
(74) Representative: Marks & Clerk LLP

(57) **Abstract**

According to one embodiment, a secret sharing storage system includes a plurality of storage devices (S1, ... Sn), a random number generator (30), a first secret sharing apparatus (10) and a second secret sharing apparatus (20). The random number generator (30) generates a random number. The first secret sharing apparatus (10) generate n pieces of first distributed data by performing distribution processing on second data obtained by encrypting first data using the random number, and separately stores the n pieces of first distributed data to n storage devices among the plurality of storage devices. The n is an integer of 2 or more. The second secret sharing apparatus (20) generates n pieces of second distributed data by performing distribution processing on the random number, and separately store the n pieces of second distributed data to n storage devices among the plurality of storage devices.

## Description

### FIELD

Embodiments described herein relate generally to a secret sharing storage system, a secret sharing storage method, and a secret sharing storage apparatus.

### BACKGROUND

Secret sharing converts data (original data) desired to be kept secret into a plurality of pieces of meaningless distributed data, and ensures that the original data can be restored by using a set of the distributed data of a predetermined combination, but that it is difficult to estimate the original data even using other combinations. When the determined combination is an arbitrary set including the number of distributed data pieces equal to or more than a threshold number, it is called threshold secret sharing. In particular, threshold secret sharing using exclusive OR (XOR) is known as a highly real-time method.

In secret sharing, there is a case where a physical random number is used as a random number used for processing of secret sharing so that it is difficult to restore the original data from distributed data. However, since the installation cost of a physical random number generator for generating a physical random number is high, it is not easy to install a physical random number generator for each user who performs secret sharing.

For this reason, for example, JP 2020-134841 A proposes a secret sharing storage system using a cloud service, which can suppress an increase in cost due to installation of a physical random number generator for secret sharing regardless of the number of users who need secret sharing.

In the secret sharing storage system using the cloud service in JP 2020-134841 A, at least two physical random number generators are required regardless of the number of users who need secret sharing. In addition, since the same number of controllers as the number of storage devices for storing distributed data are required in order to make a storage destination of the distributed data unknown to an administrator or the like of a base that distributes data in secret to generate distributed data, the configuration thereof cannot be said to be simple.

### BRIEF DESCRIPTION OF THE DRAWINGS

FIG. 1 is a block diagram illustrating an example of a configuration of a secret sharing storage system according to a first embodiment.
FIG. 2 is a diagram illustrating an example of a data structure of original data, random number data, and original data (encrypted data) encrypted with the random number data in the secret sharing storage system according to the first embodiment.
FIG. 3 is a diagram illustrating an example of distributed data of random number data, distributed data of original data (encrypted data) encrypted with the random number data, and distributed data of the original data in the secret sharing storage system according to the first embodiment.
FIG. 4 is a block diagram illustrating an example of a hardware configuration of a first secret sharing base of the secret sharing storage system according to the first embodiment.
FIG. 5 is a block diagram illustrating an example of a hardware configuration of a second secret sharing base of the secret sharing storage system according to the first embodiment.
FIG. 6 is a block diagram illustrating an example of a hardware configuration of a cloud server of the secret sharing storage system according to the first embodiment.
FIG. 7 is a sequence diagram illustrating an example of an operation procedure of distribution processing in the secret sharing storage system according to the first embodiment.
FIG. 8 is a block diagram illustrating an example of a configuration of a secret sharing storage system according to a first modification of the first embodiment.
FIG. 9 is a block diagram illustrating an example of a configuration of a secret sharing storage system according to a second modification of the first embodiment.
FIG. 10 is a block diagram illustrating an example of a configuration of a secret sharing storage system according to a third modification of the first embodiment.
FIG. 11 is a block diagram illustrating an example of a configuration of a secret sharing storage system according to a fourth modification of the first embodiment.
FIG. 12 is a block diagram illustrating an example of a configuration of a secret sharing storage system according to a second embodiment.
FIG. 13 is a diagram illustrating an example of second random number data, encrypted data encrypted with the second random number data, double-encrypted data encrypted with first random number data, and encrypted data obtained by decrypting the double-encrypted data regarding encryption in the secret sharing storage system according to the second embodiment.
FIG. 14 is a sequence diagram illustrating an example of an operation procedure of distribution processing in the secret sharing storage system according to the second embodiment.
FIG. 15 is a block diagram illustrating an example of a configuration of a secret sharing storage system according to a first modification of the second embodiment.

### DETAILED DESCRIPTION

In general, according to one embodiment, a secret sharing storage system includes a plurality of storage devices, a random number generator, a first secret sharing apparatus and a second secret sharing apparatus. The random number generator generates a random number. The first secret sharing apparatus generate n pieces of first distributed data by performing distribution processing on second data obtained by encrypting first data using the random number, and separately stores the n pieces of first distributed data to n storage devices among the plurality of storage devices. The n is an integer of 2 or more. The second secret sharing apparatus generates n pieces of second distributed data by performing distribution processing on the random number, and separately store the n pieces of second distributed data to n storage devices among the plurality of storage devices.

Hereinafter, embodiments will be described with reference to the drawings.

### (First Embodiment)

First, a first embodiment will be described.

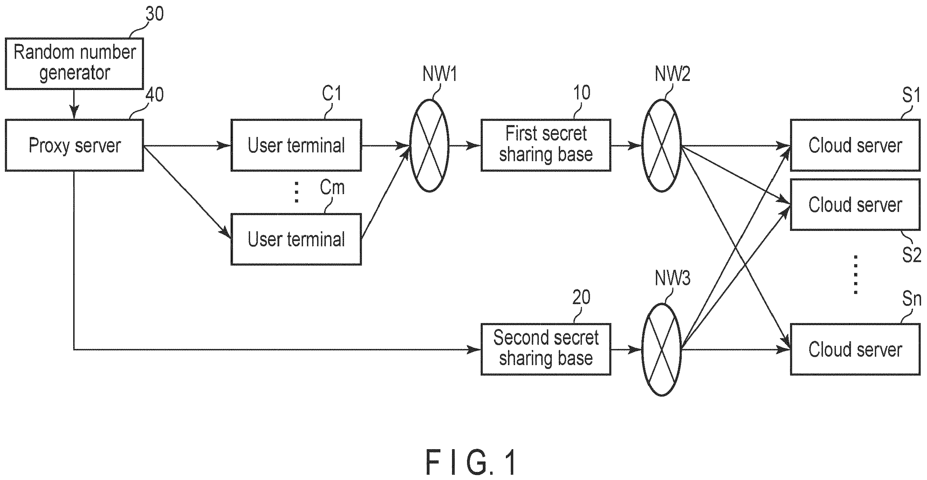

FIG. 1 is a block diagram illustrating an example of a configuration of a secret sharing storage system according to the first embodiment.

As illustrated in FIG. 1, the secret sharing storage system according to the first embodiment includes a first secret sharing base 10, a second secret sharing base 20, a random number generator 30, a proxy server 40, and n cloud servers S1 to Sn. FIG. 1 also illustrates an example of connection of the secret sharing storage system according to the first embodiment to user terminals C1 to Cm of users who use a service provided by the secret sharing storage system. m is an integer of 1 or more, and n is an integer of 2 or more.

The secret sharing storage system according to the first embodiment performs distribution processing on encrypted data obtained by encrypting data (original data) that a user wants to keep secret in the first secret sharing base 10, and stores distributed data of the encrypted data on the plurality of cloud servers S1 to Sn. Further, the secret sharing storage system performs distribution processing a key (common key) used for encrypting the original data and decrypting the encrypted original data in the second secret sharing base 20, and stores distributed data of the common key on the plurality of cloud servers S1 to Sn.

As a result, the secret sharing storage system according to the first embodiment does not require the users to manage the key, and can safely store the original data even if a part of the distributed data of the encrypted data or the distributed data of the common key is stolen from a cloud server by an unauthorized person. In addition, in the secret sharing storage system according to the first embodiment, a storage destination of the distributed data of the common key is not known to an administrator or the like of the first secret sharing base 10, and a storage destination of the distributed data of the encrypted data is not known to an administrator or the like of the second secret sharing base 20. Then, the secret sharing storage system according to the first embodiment can be implemented with a simpler configuration than a conventional secret sharing storage system that implements similar functions. This feature will be described in detail below.

Each of the user terminals C1 to Cm is communicably connected to the first secret sharing base 10 via a network NW1. The network NW1 may be, for example, a wide area network such as the Internet.

Each of the cloud servers S1 to Sn is communicably connected to the first secret sharing base 10 via a network NW2. The network NW2 may be, for example, a wide area network such as the Internet. Each of the cloud servers S1 to Sn is communicably connected to the second secret sharing base 20 via a network NW3. The network NW3 may be, for example, a wide area network such as the Internet.

Note that, although not illustrated in FIG. 1, the second secret sharing base 20 may be communicably connected to the proxy server 40 via a network. The network may be, for example, a wide area network such as the Internet. Each of the m user terminals C1 to Cm may be communicably connected to the proxy server 40 via a network. The network may be, for example, a wide area network such as the Internet.

The random number generator 30 is a physical random number generator that generates a physically varying value (in other words, a value that is difficult for a malicious third party to easily estimate) as random number data. Examples of the random number data include data of thermal noise, quantum fluctuation, and the like. Specifically, the random number generator 30 generates random number data (for example, a common key for encryption and decryption) to be used for communication between each of the user terminals C1 to Cm and each of the n cloud servers S1 to Sn.

The user terminals C1 to Cm have the same internal structure. Each of the user terminals C1 to Cm is assumed to be, for example, a terminal used in a company or an organization that handles data (original data) desired to be kept secret.

When it is necessary to store the original data held by each of the user terminals C1 to Cm, each of the user terminals C1 to Cm transmits a request for acquiring the random number data used as the common key used for encryption or decryption of communication between each of the user terminals C1 to Cm and each of the cloud servers S1 to Sn to the proxy server 40. Each of the user terminals C1 to Cm acquires the random number data from the proxy server 40, and encrypts the original data held by each of the user terminals C1 to Cm using the random number data to generate encrypted data. Each of the user terminals C1 to Cm transmits the generated encrypted data to the first secret sharing base 10.

In addition, each of the user terminals C1 to Cm transmits a restoration request to the proxy server 40 and the first secret sharing base 10 when it is necessary to use the original data held by each of the user terminals C1 to Cm. Each of the user terminals C1 to Cm receives each of the original data (encrypted data) encrypted with each of the random number data from the first secret sharing base 10, and receives each of the random number data from the proxy server 40. Each of the user terminals C1 to Cm decrypts the encrypted data received from the first secret sharing base 10 using the random number data received from the proxy server 40 to generate the original data.

In the following description, the user terminal C1 is exemplified as an example of a user terminal.

Upon receiving the request for acquiring the random number data from the user terminal C1, the proxy server 40 acquires the random number data from the random number generator 30, and transmits the acquired random number data to the user terminal C1 and the second secret sharing base 20. Further, upon receiving the restoration request from the user terminal C1, the proxy server 40 transmits a request for acquiring random number data for restoring the encrypted data to the second secret sharing base 20. The proxy server 40 acquires the random number data from the second secret sharing base 20 and transmits the acquired random number data to the user terminal C1.

Upon receiving the encrypted data from the user terminal C1 via the network NW1, the first secret sharing base 10 performs distribution processing on the encrypted data to generate n pieces of distributed data. The first secret sharing base 10 generates n pieces of distribution information indicating how the encrypted data was distributed at the time of the execution of the distribution processing. The distribution information may include information of a procedure of generating the distributed data, information of a storage destination, and the like, but does not include information of a random number used for generating the distributed data. The first secret sharing base 10 transmits the n pieces of distributed data to the cloud servers S1 to Sn. In this case, it is assumed that the first secret sharing base 10 transmits the pieces of distributed data one by one per cloud server, and randomly selects a cloud server as a storage destination of the distributed data so as to satisfy this condition. The first secret sharing base 10 stores the n pieces of distribution information in a storage in the first secret sharing base 10.

Note that an example is illustrated in which the n cloud servers S1 to Sn are prepared as storage destinations of the n pieces of distributed data. However, more than n cloud servers may be prepared, and n cloud servers may be randomly selected from the prepared cloud servers.

In addition, upon receiving the restoration request from the user terminal C1, the first secret sharing base 10 transmits a request for acquiring the distributed data of the encrypted data to each of the cloud servers S1 to Sn. After acquiring the distributed data from each of the cloud servers S1 to Sn via the network NW2, the first secret sharing base 10 reads the n pieces of distribution information stored in the storage in the first secret sharing base 10, and performs processing of restoring the distributed data using a set of a predetermined number (threshold value) of pieces of distributed data necessary for the restoration processing and each piece of the distribution information to generate the encrypted data. The first secret sharing base 10 transmits the encrypted data to the user terminal C1 via the network NW1.

Upon receiving the random number data from the proxy server 40, the second secret sharing base 20 performs distribution processing on the random number data to generates n pieces of distributed data. The second secret sharing base 20 generates n pieces of distribution information indicating how the n pieces of distributed data were generated at the time of the execution of the distribution processing. The distribution information may include information of a procedure of generating the distributed data, information of a storage destination, and the like, but does not include information of a random number used for generating the distributed data. The second secret sharing base 20 transmits the n pieces of distributed data to the cloud servers S1 to Sn via the network NW3. In this case, it is assumed that the second secret sharing base 20 transmits the pieces of distributed data one by one per cloud server, and randomly selects a cloud server as a storage destination of the distributed data so as to satisfy this condition. The second secret sharing base 20 stores the n pieces of distribution information in a storage in the second secret sharing base 20.

Note that an example is illustrated in which the n cloud servers S1 to Sn are prepared as storage destinations of the n pieces of distributed data. However, more than n cloud servers may be prepared, and n cloud servers may be randomly selected from the prepared cloud servers. In addition, in a case where more than n cloud servers are prepared, all or some of n cloud servers selected by the first secret sharing base 10 as storage destinations of the distributed data of the encrypted data may match all or some of n cloud servers selected by the second secret sharing base 20 as storage destinations of the distributed data of the random number data, or all of the n cloud servers selected by the first secret sharing base 10 as storage destinations of the distributed data of the encrypted data may be different from all of the n cloud servers selected by the second secret sharing base 20 as storage destinations of the distributed data of the random number data.

Upon receiving the request for acquiring the random number data from the proxy server 40, the second secret sharing base 20 transmits a request for acquiring the distributed data of the random number data to each of the cloud servers S1 to Sn. After receiving the distributed data from each of the cloud servers S1 to Sn via the network NW3, the second secret sharing base 20 reads the n pieces of distributed data stored in the storage in the second secret sharing base 20, and performs processing of restoring the distributed data using a set of a predetermined number (threshold value) of pieces of distributed data necessary for the restoration processing and each piece of the distribution information to generate the random number data. The second secret sharing base 20 transmits the random number data to the proxy server 40.

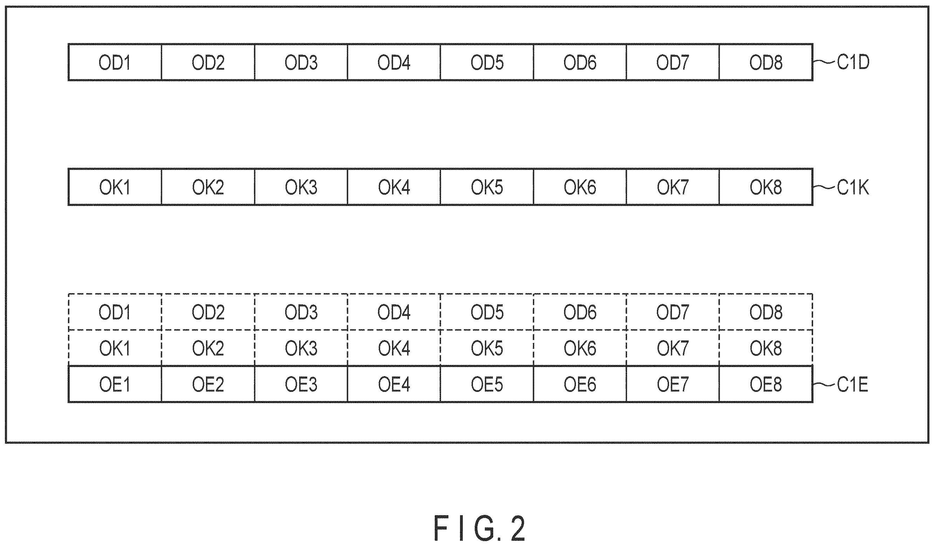

FIG. 2 illustrates an example of a data structure of the original data, the random number data, and the original data (encrypted data) encrypted with the random number data. Here, in order to make the description easy to understand, it is assumed that the number of cloud servers is set to four.

As an example, original data C1D is configured by connecting, for example, eight pieces OD1 to OD8 of original data. Random number data C1K generated by the random number generator 30 is configured by connecting, for example, eight random numbers OK1 to OK8. For example, in a case where Vernam Cipher is used, since the lengths of the original data and the random number data are the same, each of the pieces OD1 to OD8 of original data and each of the random numbers OK1 to OK8 have the same size length.

For example, in the user terminal C1, when the original data C1D is to be encrypted using the random number data C1K, as illustrated in FIG. 2, encrypted data C1E including encrypted data OE1 to OE8 is generated. For example, the encrypted data OE1 is generated by OD1 XOR OK1. The example of the configuration of the encrypted data is not limited to the example illustrated in FIG. 2.

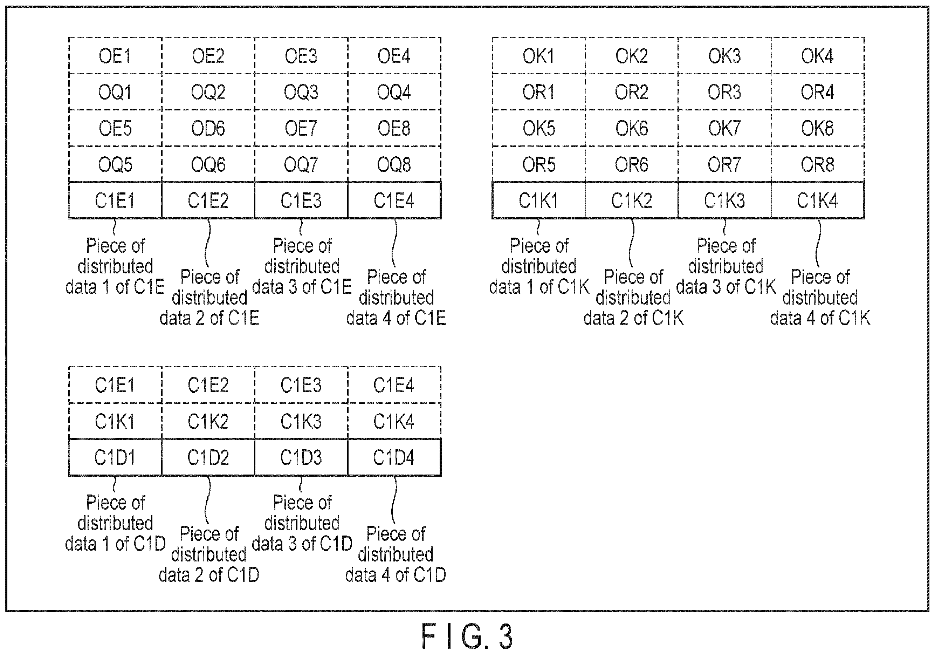

In addition, FIG. 3 illustrates an example of the distributed data of the random number data, the distributed data of the encrypted original data (encrypted data), and the distributed data of the original data.

In the first secret sharing base 10, when the encrypted data C1E (see FIG. 2) is to be secret-shared, for example, four pieces C1E1 to C1E4 of distributed data illustrated in FIG. 3 are generated using random number data OQ1 to OQ8 provided for secret sharing and having the same size as that of each of the pieces OE1 to OE8 of encrypted data. The random number data OQ1 to OQ8 for secret sharing may be pseudo random numbers. For example, the piece C1E1 is generated by calculating OE1 XOR OQ1 XOR OE5 XOR OQ5 and stored in any one of the cloud servers S1 to S4. Note that the n pieces of distribution information generated at the time of the distribution processing in the first secret sharing base 10 are information indicating which part of the original data is included, information of a storage destination of the distributed data, and the like.

Similarly, in a case where the random number data C1K (see FIG. 2) is to be secret-shared in the second secret sharing base 20, for example, four pieces C1K1 to C1K4 of distributed data illustrated in FIG. 3 are generated using the random number data OR1 to OR8 provided for secret sharing and having the same size as that of OK1 to OK8. The random number data OR1 to OR8 may be pseudo random numbers. For example, the piece C1K1 is generated by calculating OK1 XOR OR1 XOR OK5 XOR OR5 and stored in any one of the cloud servers S1 to S4. Note that the n pieces of distribution information generated at the time of the distribution processing in the second secret sharing base 20 are information indicating which part of the original data is included, information of a storage destination of the distributed data, and the like.

Returning to FIG. 1, the description of each component of the secret sharing storage system according to the first embodiment will be continued.

Upon receiving the distributed data of the encrypted data from the first secret sharing base 10, each of the cloud servers S1 to Sn stores the distributed data in a storage in each of the cloud servers S1 to Sn. Upon receiving the distributed data of the random number data from the second secret sharing base 20, each of the cloud servers S1 to Sn stores the distributed data in the storage in each of the cloud servers S1 to Sn.

Upon receiving the request for acquiring the distributed data of the encrypted data from the first secret sharing base 10, each of the cloud servers S1 to Sn reads the distributed data from the storage in each of the cloud servers S1 to Sn and transmits the read distributed data to the first secret sharing base 10. Upon receiving the request for acquiring the distributed data of the random number data from the second secret sharing base 20, each of the cloud servers S1 to Sn reads the distributed data from the storage in each of the cloud servers S1 to Sn and transmits the read distributed data to the second secret sharing base 20.

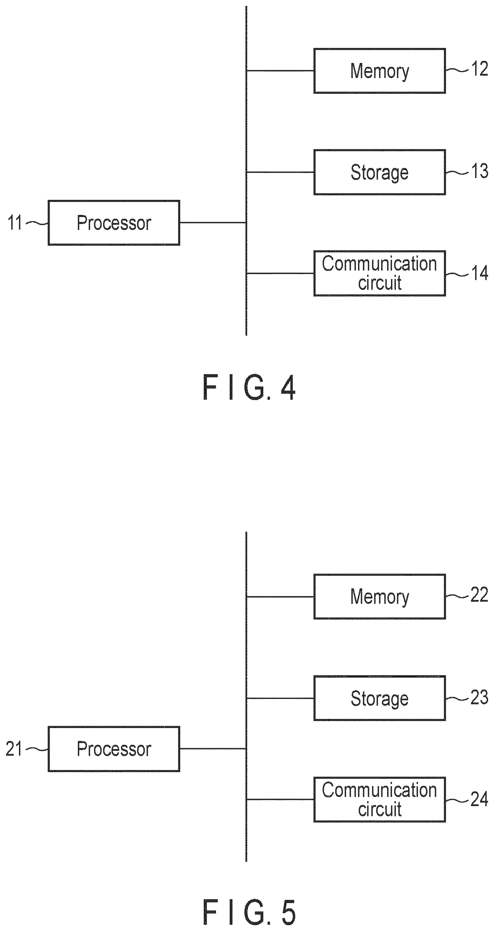

FIG. 4 is a block diagram illustrating an example of a hardware configuration of the first secret sharing base 10.

The first secret sharing base 10 includes a processor 11, a memory 12, a storage 13, and a communication circuit 14.

The processor 11 is realized using, for example, a CPU, a DSP, or an FPGA, and operates in cooperation with the memory 12 according to a program and data stored in advance in the memory 12. The processor 11 performs distribution processing on the encrypted data transmitted from the user terminal C1 via the communication circuit 14 to generate n pieces of distributed data and n pieces of distribution information. The processor 11 transmits the n pieces of distributed data to the n cloud servers S1 to Sn via the communication circuit 14. In this case, the processor 11 stores the n pieces of distribution information to the storage 13.

Upon receiving the restoration request from the user terminal C1 via the communication circuit 14, the processor 11 transmits a request for acquiring the distributed data of the encrypted data to each of the cloud servers S1 to Sn. The processor 11 reads the n pieces of distribution information from the memory 12, performs processing of restoring the distributed data using a set of a predetermined number (threshold value) of pieces of distributed data necessary for the restoration processing and corresponding distribution information to generate the encrypted data. The processor 11 transmits the encrypted data to the user terminal C1 via the communication circuit 14.

The memory 12 is realized using, for example, a RAM and a ROM, and temporarily holds a program and data necessary for execution of the operation of the first secret sharing base 10, and further, data or information generated during the operation. The RAM is, for example, a work memory used during the operation of the first secret sharing base 10. The ROM stores and holds, for example, a program and data for controlling the first secret sharing base 10 in advance.

The storage 13 is realized using, for example, an HDD or an SSD, and stores the n pieces of distribution information.

The communication circuit 14 is realized using a circuit that performs communication with various devices communicably connected to the first secret sharing base 10. The communication circuit 14 performs data communication with each of the plurality of user terminals C1 to Cm via the network NW1. The communication circuit 14 performs data communication with each of the plurality of cloud servers S1 to Sn via the network NW2.

FIG. 5 is a block diagram illustrating an example of a hardware configuration of the second secret sharing base 20.

The second secret sharing base 20 includes a processor 21, a memory 22, a storage 23, and a communication circuit 24.

The processor 21 is realized using, for example, a CPU, a DSP, or an FPGA, and operates in cooperation with the memory 22 according to a program and data stored in advance in the memory 22. The processor 21 performs distribution processing on random number data received from the proxy server 40 via the communication circuit 24, and generates n pieces of distributed data and n pieces of distribution information. The processor 21 transmits the n pieces of distributed data to the n cloud servers S1 to Sn via the communication circuit 24. In this case, the processor 21 stores the n pieces of distribution information to the storage 23.

Upon receiving the request for acquiring the random number data from the proxy server 40 via the communication circuit 24, the processor 21 transmits a request for acquiring the distributed data of the random number data to each of the cloud servers S1 to Sn. The processor 21 reads the n pieces of distribution information from the memory 22, performs processing of restoring the distributed data using a set of a predetermined number (threshold value) of pieces of distributed necessary for the restoration processing and corresponding distribution information to generate the random number data. The processor 21 transmits the random number data to the proxy server 40 via the communication circuit 24.

The memory 22 is realized using, for example, a RAM and a ROM, and temporarily holds a program and data necessary for execution of the operation of the second secret sharing base 20, and further, data or information generated during the operation. The RAM is, for example, a work memory used during the operation of the second secret sharing base 20. The ROM stores and holds, for example, a program and data for controlling the second secret sharing base 20 in advance.

The storage 23 includes, for example, an HDD or an SSD, and stores the n pieces of distribution information.

The communication circuit 24 is realized using a circuit that performs communication with various devices communicably connected to the second secret sharing base 20. The communication circuit 24 performs data communication with the proxy server 40. The communication circuit 24 performs data communication with each of the plurality of cloud servers S1 to Sn via the network NW3.

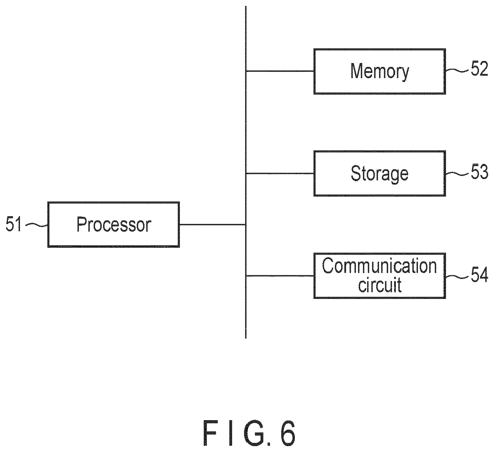

FIG. 6 is a block diagram illustrating an example of a hardware configuration of each of the cloud servers S1 to Sn.

The cloud servers S1 to Sn have the same internal configuration. Specifically, each of the cloud servers S1 to Sn includes a processor 51, a memory 52, a storage 53, and a communication circuit 54. Hereinafter, the configurations of the cloud servers S1 to Sn will be described using the cloud server S1 as an example.

The processor 51 is realized using, for example, a CPU, a DSP, or an FPGA, and operates in cooperation with the memory 52 according to a program and data stored in advance in the memory 52. The processor 51 stores the distributed data of the encrypted data received from the first secret sharing base 10 and the distributed data of the random number data received from the second secret sharing base 20 to the storage 53 via the communication circuit 54.

Upon receiving the request for acquiring the distributed data of the encrypted data from the first secret sharing base 10 via the communication circuit 54, the processor 51 reads the distributed data of the encrypted data stored in the storage 53 and transmits the distributed data to the first secret sharing base 10. Upon receiving the request for acquiring the distributed data from the second secret sharing base 20 via the communication circuit 54, the processor 51 reads the distributed data of the random number data stored in the storage 53 and transmits the distributed data of the random number data to the second secret sharing base 20.

The memory 52 is realized using, for example, a RAM and a ROM, and temporarily holds a program and data necessary for execution of the operation of the cloud server S1, and further, data or information generated during the operation. The RAM is, for example, a work memory used during the operation of the cloud server S1. The ROM stores and holds, for example, a program and data for controlling the cloud server S1 in advance.

The storage 53 is realized using, for example, an HDD or an SSD, and stores the distributed data of the encrypted data and the distributed data of the random number data.

The communication circuit 54 is realized using a circuit that communicates with various devices communicably connected to the cloud server S1. The communication circuit 54 performs data communication with the first secret sharing base 10 via the network NW2. The communication circuit 54 performs data communication with the second secret sharing base 20 via the network NW3.

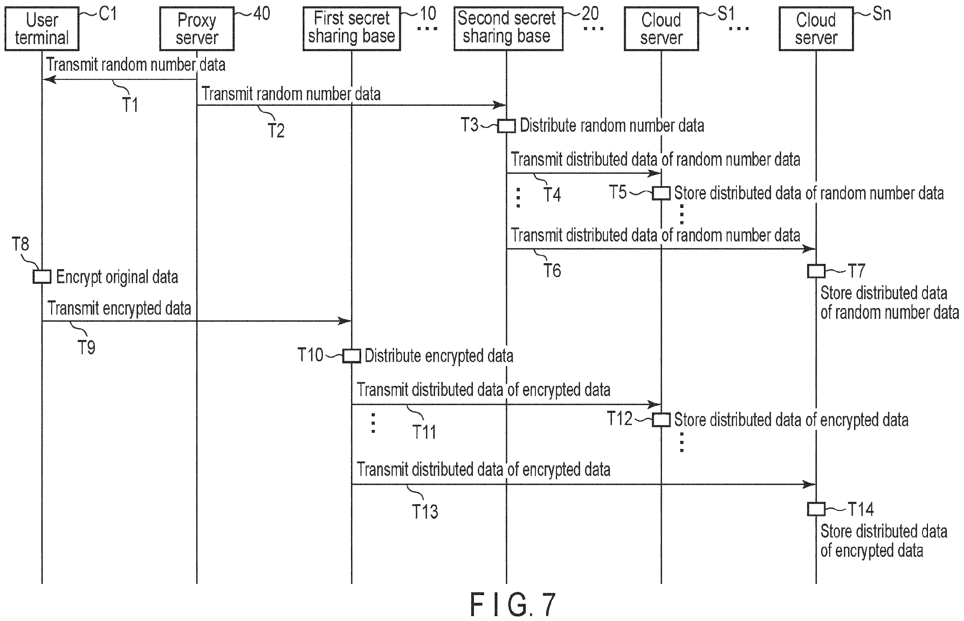

Next, a distribution processing operation of the secret sharing storage system according to the first embodiment will be described. FIG. 7 is a sequence diagram illustrating an example of an operation procedure of the distribution processing. In the description of FIG. 7, the user terminal C1 is exemplified as an example of a user terminal.

Before execution of the distribution processing, first, the proxy server 40 acquires random number data from the random number generator 30. The proxy server 40 transmits the random number data to the user terminal C1 and the second secret sharing base 20 (T1, T2).

The user terminal C1 stores the random number data received from the proxy server 40 in a memory in the user terminal C1.

The second secret sharing base 20 performs distribution processing on the random number data received from the proxy server 40 to generate n pieces of distributed data and distribution information indicating how the n pieces of distributed data are generated (T3). Note that the second secret sharing base 20 may delete the random number data.

The second secret sharing base 20 transmits the n pieces of distributed data to the cloud servers S1 to Sn via the network NW3 (T4, T6). In this case, it is assumed that the second secret sharing base 20 transmits the pieces of distributed data one by one per cloud server, and randomly selects a cloud server as a transmission destination of the distributed data so as to satisfy this condition. The second secret sharing base 20 stores the n pieces of distribution information in the storage 23 in the second secret sharing base 20.

Each of the cloud servers S1 to Sn stores the distributed data of the random number data received from the second secret sharing base 20 in the storage 53 (T5, T7).

The user terminal C1 reads the random number data from the memory in the user terminal C1, and encrypts the original data using the random number data to generate encrypted data (T8). Note that the user terminal C1 may delete the random number data after executing the encryption processing.

The user terminal C1 transmits the encrypted data to the first secret sharing base 10 via the network NW1 (T9) .

The first secret sharing base 10 performs distribution processing on the encrypted data received from the user terminal C1 to generate each of n pieces of distributed data and distribution information indicating how the n pieces of distributed data are generated (T10). Note that the first secret sharing base 10 may delete the encrypted data after executing the distribution processing.

The first secret sharing base 10 transmits the n pieces of distributed data to the cloud servers S1 to Sn via the network NW2 (T11, T13). In this case, it is assumed that the first secret sharing base 10 transmits the pieces of distributed data one by one per cloud server, and randomly selects a cloud server as a transmission destination of the distributed data so as to satisfy this condition. The first secret sharing base 10 stores the n pieces of distribution information in the storage 13 in the first secret sharing base 10.

Each of the cloud servers S1 to Sn stores the distributed data of the encrypted data received from the first secret sharing base 10 in the storage 53 (T12, T14).

Next, a restoration processing operation of the secret sharing storage system according to the first embodiment will be described. Also in this case, the user terminal C1 is exemplified as an example of the user terminal.

When the decryption processing is to be executed, each of the cloud servers S1 to Sn transmits the distributed data of the encrypted data to the first secret sharing base 10 and transmits the distributed data of the random number data to the second secret sharing base 20.

Upon receiving the distributed data of the encrypted data from each of the cloud servers S1 to Sn, the first secret sharing base 10 reads the distribution information of the distributed data of the encrypted data from the storage 13, and performs the processing of restoring the distributed data using a set of a predetermined number (threshold value) of pieces of distributed data necessary for the restoration processing and each piece of the distribution information to generate the encrypted data. The first secret sharing base 10 transmits the encrypted data to the user terminal C1.

Upon receiving the distributed data of the random number data from each of the cloud servers S1 to Sn, the second secret sharing base 20 reads the distribution information of the distributed data of the random number data from the storage 23, and performs the processing of restoring the distributed data using a set of a predetermined number (threshold value) of pieces of distributed data necessary for the restoration processing and each piece of the distribution information to generate the random number data. The second secret sharing base 20 transmits the random number data to the proxy server 40.

The proxy server 40 transmits the random number data received from the second secret sharing base 20 to the user terminal C1.

The user terminal C1 performs the decryption processing on the encrypted data received from the first secret sharing base 10 using the random number data received from the proxy server 40 to generate the original data.

As described above, the configuration of the secret sharing storage system according to the first embodiment is simplified as compared with the conventional secret sharing storage system that implements the similar functions. Specifically, while the conventional secret sharing storage system requires two physical random number generators, the secret sharing storage system according to the first embodiment requires only one physical random number generator. That is, in the secret sharing storage system according to the first embodiment, since the effectiveness of the encryption in the user terminal C1 extends to the distributed data of the encrypted data stored in the cloud servers S1 to Sn in a distributed manner, it is possible to make it unnecessary to use a physical random number for the processing of secret sharing in the first secret sharing base 10.

In addition, in the conventional secret sharing storage system, the same number of controllers as the number of storage destinations are required in order to prevent unauthorized access to distributed data by the administrator or the like of the secret sharing base. However, the secret sharing storage system according to the first embodiment keeps the administrator or the like of the first secret sharing base 10 from knowing a storage destination of the distributed data of the common key, and keeps the administrator or the like of the second secret sharing base 20 from knowing a storage destination of the distributed data of the encrypted data, so that unauthorized access to the distributed data by the administrators or the like of the secret sharing bases (first secret sharing base 10 and second secret sharing base 20) can be prevented without requiring the same number of controllers as the number of storage destinations.

### (First Modification of First Embodiment)

Next, a first modification of the first embodiment will be described.

In the secret sharing storage system according to the first embodiment, since the random number data used as the common key between the user terminals C1 to Cm and the cloud servers S1 to Sn is distributed using the wide area networks or the like, there is a risk that the common key may be stolen by a third party. Therefore, in the first modification of the first embodiment, a secret sharing storage system that uses a network in which secure communication is guaranteed by quantum cryptographic communication at the time of distribution of a common key, and that prevents the common key from being stolen by a third party is exemplified.

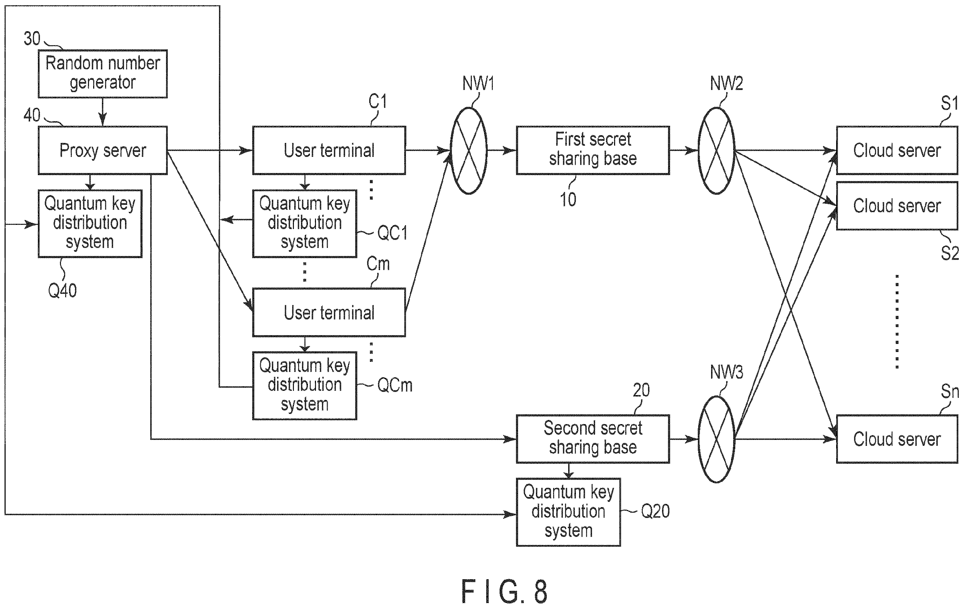

FIG. 8 is a block diagram illustrating an example of a configuration of the secret sharing storage system according to the first modification of the first embodiment. The same components as those of the secret sharing storage system according the first embodiment in the secret sharing storage system according to the first modification of the first embodiment are denoted by the same reference signs, and the description thereof will be simplified or omitted. Differences between the secret sharing storage system according to the first embodiment and the secret sharing storage system according to the first modification of the first embodiment will be mainly described below, and description of similar parts will be omitted.

As illustrated in FIG. 8, in the secret sharing storage system according to the first modification of the first embodiment, a second secret sharing base 20 is communicably connected to a proxy server 40 via a network in which secure communication is guaranteed by quantum cryptographic communication.

Each of user terminals C1 to Cm is communicably connected to the proxy server 40 via a network in which secure communication is guaranteed by quantum cryptographic communication.

The quantum cryptographic communication is cryptographic communication performed using a key shared by quantum key distribution systems. For example, each of the quantum key distribution systems has a function of ensuring secure communication between two parties that perform communication based on an optical fiber connection and key sharing between two bases including the key distribution systems. The secret sharing storage system according to the first modification of the first embodiment includes quantum key distribution systems QC1 to QCm connected to the user terminals C1 to Cm, respectively, a quantum key distribution system Q40 connected to the proxy server 40, and a quantum key distribution system Q20 connected to the second secret sharing base 20. The quantum key distribution system Q40 and each of the quantum key distribution systems QC1 to QCm are connected by optical fibers, and the quantum key distribution system Q40 and the quantum key distribution system Q20 are connected by an optical fiber. Any cable may be used as long as it is a substitute for each optical fiber.

In the following description, the user terminal C1 is exemplified as an example of a user terminal.

Upon receiving a request for distributing original data from the user terminal C1, the proxy server 40 acquires random number data used as a common key between the user terminal C1 and each of cloud servers S1 to Sn from the random number generator 30, and transmits the random number data to the user terminal C1 and the second secret sharing base 20 via a network in which secure communication is guaranteed by quantum cryptographic communication.

Upon receiving a request for acquiring the random number data from the proxy server 40, the second secret sharing base 20 restores the random number data acquired from the cloud servers S1 to Sn, and then transmits the random number data via a network in which secure communication is guaranteed by quantum cryptographic communication.

Upon receiving a request for restoring the original data from the user terminal C1, the proxy server 40 transmits the random number data acquired from the random number generator 30 to the user terminal C1 via a network in which secure communication is guaranteed by quantum cryptographic communication.

In the secret sharing storage system according to the first modification of the first embodiment, a network in which secure communication is guaranteed by quantum cryptographic communication is used for distribution of the common key between the user terminals C1 to Cm and the cloud servers S1 to Sn. As a result, the distributed data of the original data can be stored without a risk that the common key may be stolen by a third party.

### (Second Modification of First Embodiment)

Next, a second modification of the first embodiment will be described.

In the secret sharing storage system according to the first embodiment, only the one first secret sharing base 10 and the one second secret sharing base 20 are arranged. However, in a case where the first secret sharing base 10 and the second secret sharing base 20 malfunction, the distribution processing or the restoration processing of the original data of the user cannot be executed. In the second modification of the first embodiment, a secret sharing storage system is exemplified, in which a preliminary secret sharing base is disposed, which performs either distribution processing or restoration processing on behalf of a first secret sharing base 10 or a second secret sharing base 20 when the first secret sharing base 10 or the second secret sharing base 20 malfunctions or a sign thereof is detected.

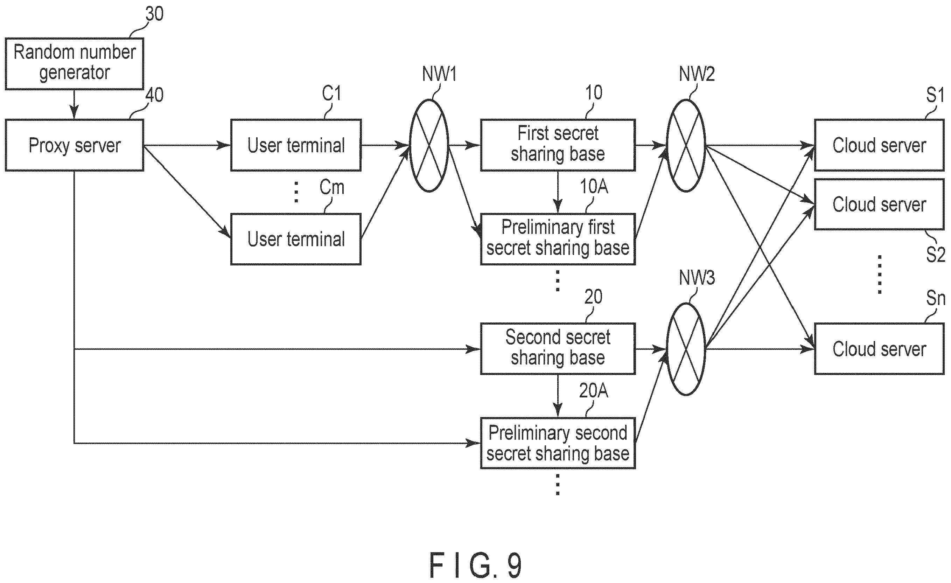

FIG. 9 is a block diagram illustrating an example of a configuration of the secret sharing storage system according to the second modification of the first embodiment. The same components as those of the secret sharing storage system according the first embodiment in the secret sharing storage system according to the second modification of the first embodiment are denoted by the same reference signs, and the description thereof will be simplified or omitted. Differences between the secret sharing storage system according to the first embodiment and the secret sharing storage system according to the second modification of the first embodiment will be mainly described below, and description of similar parts will be omitted.

As illustrated in FIG. 9, in the secret sharing storage system according to the second modification of the first embodiment, at least one preliminary first secret sharing base 10A and at least one preliminary second secret sharing base 20A are arranged.

Each of user terminals C1 to Cm is communicably connected to the preliminary first secret sharing base 10A via a network NW1.

Each of cloud servers S1 to Sn is communicably connected to the preliminary first secret sharing base 10A via a network NW2. Each of the cloud servers S1 to Sn is communicably connected to the preliminary second secret sharing base 20A via a network NW3.

Although not illustrated in FIG. 9, the preliminary second secret sharing base 20A may be communicably connected to a proxy server 40 via a network.

The preliminary first secret sharing base 10A has the same configuration as the first secret sharing base 10 and has a function of performing distribution processing and restoration processing on encrypted data received from the user terminal C1. Since details of the function are similar to those of the first secret sharing base 10, the description thereof will be omitted.

The preliminary second secret sharing base 20A has the same configuration as the second secret sharing base 20 and has a function of performing distribution processing and restoration processing on random number data received from the proxy server 40. Since details of the function are similar to those of the second secret sharing base 20, the description thereof will be omitted.

The first secret sharing base 10 can detect an operation failure or a sign thereof, and sends distribution information of distributed data of encrypted data and a notification of authority delegation of the distribution processing and the restoration processing to the preliminary first secret sharing base 10A when detecting the operation failure or the sign thereof.

Upon receiving the distribution information of the distributed data of the encrypted data and the notification of the authority delegation of the distribution processing and the restoration processing from the first secret sharing base 10, the preliminary first secret sharing base 10A performs the processing of the first secret sharing base 10 on behalf of the first secret sharing base 10. The preliminary first secret sharing base 10A may operate independently without being connected to the first secret sharing base 10.

Note that, instead of the first secret sharing base 10 performing active/inactive monitoring of the own apparatus, the preliminary first secret sharing base 10A may perform active/inactive monitoring of the first secret sharing base 10.

Similarly, the second secret sharing base 20 can detect an operation failure or a sign thereof, and the second secret sharing base 20 transmits distribution information of distributed data of random number data used as a common key and a notification of authority delegation of the distribution processing and the restoration processing to the preliminary second secret sharing base 20A when detecting the operation failure or the sign thereof.

Upon receiving the distribution information of the distributed data of the random number data and the notification of the authority delegation of the distribution processing and the restoration processing from the second secret sharing base 20, the preliminary second secret sharing base 20A performs the processing of the second secret sharing base 20 on behalf of the second secret sharing base 20. The preliminary second secret sharing base 20A may operate independently without being connected to the second secret sharing base 20.

Note that, instead of the second secret sharing base 20 performing active/inactive monitoring of the own apparatus, the preliminary second secret sharing base 20A may perform active/inactive monitoring of the second secret sharing base 20.

Although not illustrated in FIG. 9, an external PC or mobile terminal may perform active/inactive monitoring of the first secret sharing base 10 and the second secret sharing base 20.

In the secret sharing storage system according to the second modification of the first embodiment, the preliminary secret sharing bases (preliminary first secret sharing base 10A and preliminary second secret sharing base 20A) are arranged, which perform either the distribution processing or the restoration processing on behalf of the secret sharing bases (first secret sharing base 10 and second secret sharing base 20) when the secret sharing bases fall into an operation failure or a sign of the operation failure is detected. As a result, even if the first secret sharing base 10 and the second secret sharing base 20 do not operate due to a disaster or the like, the distribution processing and the decryption processing can be continuously executed.

### (Third Modification of First Embodiment)

Next, a third modification of the first embodiment will be described.

In the secret sharing storage system according to the first embodiment, the proxy server is required. However, a user terminal performs processing that is performed in the proxy server, the proxy server is unnecessary, and a secret sharing storage system having a simpler configuration can be implemented.

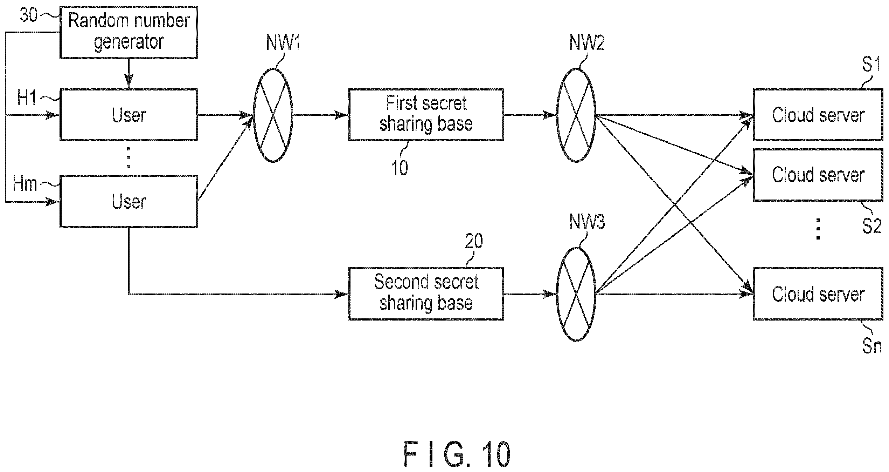

FIG. 10 is a block diagram illustrating an example of a configuration of a secret sharing storage system according to the third modification of the first embodiment. The same components as those of the secret sharing storage system according the first embodiment in the secret sharing storage system according to the third modification of the first embodiment are denoted by the same reference signs, and the description thereof will be simplified or omitted. Differences between the secret sharing storage system according to the first embodiment and the secret sharing storage system according to the third modification of the first embodiment will be mainly described below, and description of similar parts will be omitted.

As illustrated in FIG. 10, in the secret sharing storage system according to the third modification of the first embodiment, the proxy server 40 in the secret sharing storage system according to the first embodiment is deleted. In the secret sharing storage system according to the third modification of the first embodiment, user terminals H1 to Hm undertake the processing performed in the proxy server 40.

Each of the user terminals H1 to Hm is communicably connected to a first secret sharing base 10 via a network NW1. Each of the user terminals H1 to Hm may be communicably connected to a second secret sharing base 20. The user terminals H1 to Hm have the same internal configuration.

When it is necessary to distribute original data held by each of the user terminals H1 to Hm, each of the user terminals H1 to Hm acquires, from a random number generator 30, random number data used as a common key used for encryption or decryption of communication between each of the user terminals H1 to Hm and each of cloud servers S1 to Sn, and transmits the random number data to the second secret sharing base 20. Each of the user terminals H1 to Hm encrypts the original data using the random number data to generate encrypted data. Each of the user terminals H1 to Hm transmits the encrypted data to the first secret sharing base 10 via the network NW1. Each of the user terminals H1 to Hm may delete the random number data after the encryption processing.

In addition, each of the user terminals H1 to Hm transmits a request for acquiring the encrypted data to the first secret sharing base 10 and a request for acquiring the random number data to the second secret sharing base 20 when it is necessary to restore the original data held by each of the user terminals H1 to Hm. Each of the user terminals H1 to Hm uses the random number data received from the second secret sharing base 20 to decrypt the encrypted data received from the first secret sharing base 10 to generate the original data.

In the secret sharing storage system according to the third modification of the first embodiment, each of the user terminals H1 to Hm undertakes the processing executed by the proxy server 40, so that the proxy server 40 can be made unnecessary.

### (Fourth Modification of First Embodiment)

Next, a fourth modification of the first embodiment will be described.

In the secret sharing storage system according to the first embodiment, the distributed data of the encrypted data and the distributed data of the random number data used as the common key between the user terminal and the cloud server are stored in each of the cloud servers S1 to Sn, and thus there is a problem that the size of the stored data increases as compared with the case of simply storing the distributed data of the original data. The fourth modification of the first embodiment exemplifies a secret sharing storage system in which each of cloud servers S1 to Sn decrypts distributed data of original data from distributed data of encrypted data and distributed data of random number data used as a common key, and stores the distributed data of the original data to reduce a data size of stored data.

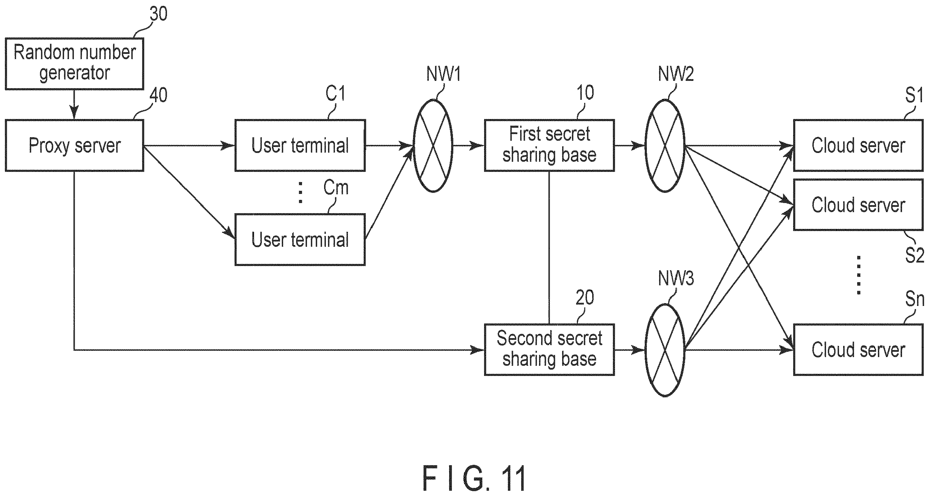

FIG. 11 is a block diagram illustrating an example of a configuration of the secret sharing storage system according to the fourth modification of the first embodiment. The same components as those of the secret sharing storage system according the first embodiment in the secret sharing storage system according to the fourth modification of the first embodiment are denoted by the same reference signs, and the description thereof will be simplified or omitted. Differences between the secret sharing storage system according to the first embodiment and the secret sharing storage system according to the fourth modification of the first embodiment will be mainly described below, and description of similar parts will be omitted.

In the secret sharing storage system according to the fourth modification of the first embodiment, a first secret sharing base 10 may be communicably connected to a second secret sharing base 20 via a network.

When it is necessary to distribute original data held by each of user terminals C1 to Cm, each of the user terminals C1 to Cm acquires, from a proxy server 40, random number data used as a common key used for encryption or decryption of communication between each of the user terminals C1 to Cm and each of the cloud servers S1 to Sn. Each of the user terminals C1 to Cm encrypts the original data to generate encrypted data, and transmits the encrypted data to the first secret sharing base 10. Each of the user terminals C1 to Cm may delete the random number data after generating the encrypted data.

In addition, when it is necessary to restore the original data held by each of the user terminals C1 to Cm, each of the user terminals C1 to Cm again acquires, from the proxy server 40, the random number data used as the common key between each of the user terminals C1 to Cm and each of the cloud servers S1 to Sn. Each of the user terminals C1 to Cm acquires the encrypted data from the first secret sharing base 10, decrypts the encrypted data using the re-acquired random number data, and generates the original data.

In the following description, the user terminal C1 is exemplified as an example of a user terminal.

The first secret sharing base 10 transmits a part of distribution information of distributed data of the encrypted data received from the user terminal C1 to the second secret sharing base 20. The part of the distribution information includes information regarding a method of generating the distributed data and storage destination information indicating to which cloud server a set of the distributed data and the corresponding distribution information was transmitted.

The second secret sharing base 20 stores the part of the distribution information received from the first secret sharing base 10 in the storage 23.

Upon receiving the random number data from the proxy server 40, the second secret sharing base 20 reads the information regarding the method of generating the distributed data included in the part of the distribution information received from the first secret sharing base 10, and generates each of n pieces of distributed data of the random number data and corresponding n pieces of distribution information using the same distribution method as that of the first secret sharing base 10. The second secret sharing base 20 reads the storage destination information included in the part of the distribution information received from the first secret sharing base 10, and transmits a set of the distributed data of the random number data and the corresponding distribution information to the cloud servers S1 to Sn. In this case, if the n pieces of distributed data of the encrypted data generated by the first secret sharing base 10 are represented as C1E1, C1E2, ..., and C1En in the order of generation, and C1K1, C1K2, ..., and C1Kn in the order of generation of the n pieces of distributed data of the random number data generated by the second secret sharing base 20 (see FIG. 3), the second secret sharing base 20 transmits C1K1 to the cloud server storing C1E1, C1K2 to the cloud server storing C1E2, ..., and C1Kn to the cloud server storing C1En based on the storage destination information.

Upon receiving the distributed data of the encrypted data from the first secret sharing base 10 and receiving the distributed data of the random number data from the second secret sharing base 20, each of the cloud servers S1 to Sn performs decryption processing on the distributed data of the encrypted data received from the first secret sharing base 10 using the distributed data of the random number data received from the second secret sharing base 20 so as to generate and store one piece of the distributed data of the original data. Each of the cloud servers S1 to Sn may delete the distributed data of the encrypted data and the distributed data of the random number data after the decryption processing.

In addition, in a case where each of the cloud servers S1 to Sn receives a request for acquiring the distributed data from the first secret sharing base 10, each of the cloud servers S1 to Sn receives the distributed data of the random number data from the second secret sharing base 20, performs encryption processing on the distributed data of the original data using the distributed data of the random number data so as to generate the distributed data of the encrypted data. Each of the cloud servers S1 to Sn transmits the generated respective encrypted data to the first secret sharing base 10.

Note that the part of the distribution information held by the second secret sharing base 20 may be transmitted to the first secret sharing base 10, and the first secret sharing base 10 may perform the distribution processing and the restoration processing on the encrypted data based on the information. In addition, the first secret sharing base 10 and the second secret sharing base 20 may agree on the method of the distribution processing and the storage destination of the distributed data in advance, and perform the distribution processing and the restoration processing based on the agreement. The method of transmitting or storing the distributed data of the encrypted data and the distributed data of the random number data used as the common key to the cloud servers according to the order of generation is not limited to the above example.

As described above, since the distributed data of the original data is stored in the cloud servers, the data size stored in the cloud servers is reduced to half as compared with the first embodiment.

That is, in the secret sharing storage system according to the fourth modification of the first embodiment, each of the cloud servers S1 to Sn decrypts the distributed data of the original data from the distributed data of the encrypted data and the distributed data of the random number data used as the common key, and stores the distributed data of the original data, so that the data size stored in the cloud servers is reduced to half.

### (Second Embodiment)

Next, a second embodiment will be described.

In the second embodiment, a secret sharing storage system having a function equivalent to that of the conventional secret sharing storage system, having a configuration different from that of the secret sharing storage system according to the first embodiment, and having a configuration simpler than that of the conventional secret sharing storage system will be described. The secret sharing storage system according to the second embodiment has a configuration in which arrangement of a proxy server 40 and user terminals C1 to Cm is different from that in the secret sharing storage system according to the first embodiment, and a second random number generator is added to a first secret sharing base 10.

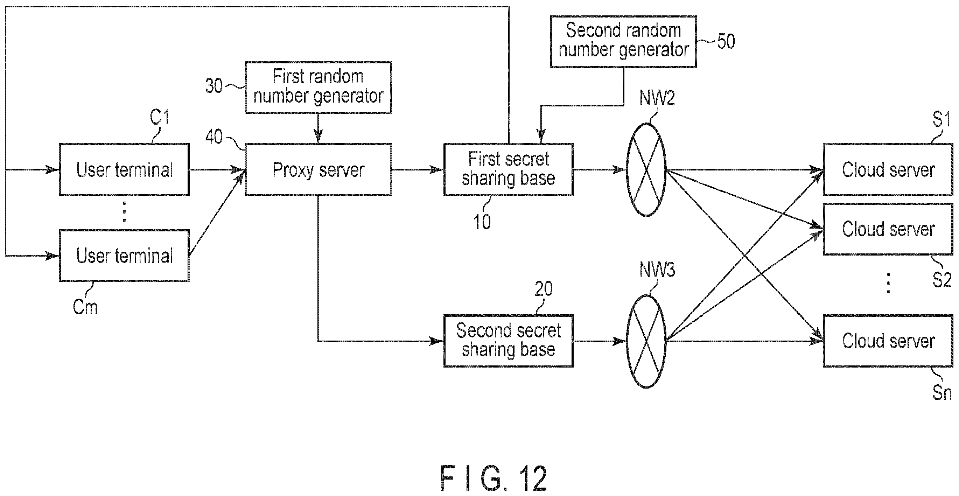

FIG. 12 is a block diagram illustrating an example of a configuration of the secret sharing storage system according to the second embodiment. The same components as those of the secret sharing storage system according the first embodiment in the secret sharing storage system according to the second embodiment are denoted by the same reference signs, and the description thereof will be simplified or omitted. Differences between the secret sharing storage system according to the first embodiment and the secret sharing storage system according to the second embodiment will be mainly described below, and description of similar parts will be omitted.

As illustrated in FIG. 12, in the secret sharing storage system according to the second embodiment, the arrangement of the proxy server 40 and the user terminals C1 to Cm is different from that in the secret sharing storage system according to the first embodiment is changed, and the second random number generator 50 connectable to the first secret sharing base 10 is included. Note that a "first random number generator 30" of the secret sharing storage system according to the second embodiment illustrated in FIG. 12 corresponds to the "random number generator 30" of the secret sharing storage system according to the first embodiment.

Each of the user terminals C1 to Cm may be communicably connected to the first secret sharing base 10. Furthermore, each of the user terminals C1 to Cm may be communicably connected to the proxy server 40.

The proxy server 40 may be communicably connected to the first secret sharing base 10.

The first random number generator 30 is a physical random number generator that generates a physically varying value as first random number data. The first random number generator 30 generates, for example, first random number data (for example, a common key for encryption and decryption) used for communication between the proxy server 40 and each of cloud servers S1 to Sn.

Similarly to the first random number generator 30, the second random number generator 50 is a physical random number generator that generates a physically varying value as first random number data. The second random number generator 50 generates, for example, second random number data (for example, a common key for encryption and decryption) used for communication between each of the user terminals C1 to Cm and the first secret sharing base 10.

Each of the user terminals C1 to Cm transmits a distribution request to the first secret sharing base 10 when it is necessary to distribute original data held by each of the user terminals C1 to Cm. Each of the user terminals C1 to Cm acquires, from the first secret sharing base 10, second random number data used as a common key used for encryption or decryption of communication between each of the user terminals C1 to Cm and the first secret sharing base 10. Each of the user terminals C1 to Cm encrypts the held original data by using the second random number data to generate encrypted data. Each of the user terminals C1 to Cm transmits the generated encrypted data to the proxy server 40. Each of the user terminals C1 to Cm may delete the second random number data after generating the encrypted data.

In addition, each of the user terminals C1 to Cm transmits a restoration request to the proxy server 40 and the first secret sharing base 10 when it is necessary to decrypt the original data held by each of the user terminals C1 to Cm. Each of the user terminals C1 to Cm acquires, from the first secret sharing base 10, the second random number data used as the common key used for encryption or decryption of communication between each of the user terminals C1 to Cm and the first secret sharing base 10. Each of the user terminals C1 to Cm receives the encrypted data of the original data encrypted with the first random number data from the proxy server 40, decrypts the encrypted data using the first random number data received from the first secret sharing base 10, and generates the original data. Each of the user terminals C1 to Cm may delete the first random number data after generating the original data.

In the following description, the user terminal C1 is exemplified as an example of a user terminal.

Upon receiving the encrypted data encrypted with the second random number data from the user terminal C1, the proxy server 40 acquires the first random number data used as a common key between the proxy server 40 and a second secret sharing base 20 from the first random number generator 30, and transmits the first random number data to the second secret sharing base 20. The proxy server 40 double encrypts the encrypted data received from the user terminal C1 using the acquired first random number data to generate double-encrypted data. The proxy server 40 transmits the double-encrypted data to the first secret sharing base 10.

In addition, upon receiving the request for restoring the original data from the user terminal C1, the proxy server 40 transmits a request for acquiring the second random number data and the double-encrypted data of the original data encrypted with the first random number data to the first secret sharing base 10, and transmits a request for acquiring the first random number data to the second secret sharing base 20. The proxy server 40 receives the double-encrypted data from the first secret sharing base 10 and receives the first random number data from the second secret sharing base 20. The proxy server 40 decrypts the double-encrypted data received from the first secret sharing base 10 using the first random number data to generate encrypted data of the original data encrypted with the second random number data. The proxy server 40 transmits the generated encrypted data to the user terminal C1.

Upon receiving the distribution request from the user terminal C1, the first secret sharing base 10 acquires, from the second random number generator 50, the second random number data used as a common key used for encryption or decryption of communication between the user terminal C1 and the first secret sharing base 10, and transmits the second random number data to the user terminal C1.

The first secret sharing base 10 decrypts the double-encrypted data received from the proxy server 40 using the second random number data, and generates encrypted data encrypted with the first random number data used as a common key between the proxy server 40 and each of the cloud servers S1 to Sn. The first secret sharing base 10 may delete the second random number data after decrypting the double-encrypted data.

The first secret sharing base 10 performs distribution processing on the encrypted data and generates each of n pieces of distributed data of the encrypted data and corresponding n pieces of distribution information. The first secret sharing base 10 transmits the n pieces of distributed data to each of the n cloud servers S1 to Sn via a network NW2. In this case, it is assumed that the first secret sharing base 10 transmits the pieces of distributed data one by one per cloud server, and randomly selects a cloud server as a storage destination of the distributed data so as to satisfy this condition. The first secret sharing base 10 stores the n pieces of distribution information in a storage in the first secret sharing base 10.

Note that an example is illustrated in which the n cloud servers S1 to Sn are prepared as storage destinations of the n pieces of distributed data. However, more than n cloud servers may be prepared, and n cloud servers may be randomly selected from the prepared cloud servers.

Upon receiving the restoration request from the user terminal C1, the first secret sharing base 10 acquires, from the second random number generator 50, the second random number data used as the common key used for encryption or decryption of communication between the user terminal C1 and the first secret sharing base 10, and transmits the second random number data to the user terminal C1.

The first secret sharing base 10 transmits a request for acquiring the distributed data of the encrypted data of the original data encrypted with the first random number data to the cloud servers S1 to Sn. After receiving the distributed data from each of the cloud servers S1 to Sn via the network NW2, the first secret sharing base 10 reads the distribution information of the distributed data of the encrypted data stored in the storage in the first secret sharing base 10, and performs restoration processing on the distributed data using a set of a predetermined number (threshold value) of pieces of distributed data necessary for the restoration processing and each piece of the distribution information to generate the encrypted data.

The first secret sharing base 10 double encrypts the encrypted data with the second random number data to generate double-encrypted data of the original data encrypted with the first random number data and the second random number data. The first secret sharing base 10 transmits the double-encrypted data to the user terminal C1.

Upon receiving the first random number data from the proxy server 40, the second secret sharing base 20 performs distribution processing on the first random number data to generate n pieces of distributed data of the first random number data and corresponding n pieces of distribution information. The second secret sharing base 20 transmits the n pieces of distributed data to the n cloud servers S1 to Sn via a network NW3. In this case, it is assumed that the second secret sharing base 20 transmits the pieces of distributed data one by one per cloud server, and randomly selects a cloud server as a storage destination of the distributed data so as to satisfy this condition. The second secret sharing base 20 stores the distribution information of the n pieces of distributed data in a storage in the second secret sharing base 20.

Note that an example is illustrated in which the n cloud servers S1 to Sn are prepared as storage destinations of the n pieces of distributed data. However, more than n cloud servers may be prepared, and n cloud servers may be randomly selected from the prepared cloud servers. In addition, in a case where more than n cloud servers are prepared, all or some of n cloud servers selected by the first secret sharing base 10 as storage destinations of the distributed data of the encrypted data may match all or some of n cloud servers selected by the second secret sharing base 20 as storage destinations of the distributed data of the first random number data, or all of the n cloud servers selected by the first secret sharing base 10 as storage destinations of the distributed data of the encrypted data may be different from all of the n cloud servers selected by the second secret sharing base 20 as storage destinations of the distributed data of the first random number data.

Upon receiving the request for acquiring the first random number data from the proxy server 40, the second secret sharing base 20 transmits the request for acquiring the distributed data of the first random number data to the cloud servers S1 to Sn. After receiving the distributed data from each of the cloud servers S1 to Sn via the network NW3, the second secret sharing base 20 reads the distribution information of the distributed data of the first random number data stored in the storage in the second secret sharing base 20, and performs the restoration processing on the distributed data using a set of distributed data of a predetermined number (threshold value) of pieces of distributed data necessary for the restoration processing and each piece of the distribution information to generate the first random number data. The second secret sharing base 20 transmits the first random number data to the proxy server 40.

Upon receiving the distributed data of the encrypted data from the first secret sharing base 10, each of the cloud servers S1 to Sn stores the distributed data of the encrypted data in storage in the cloud servers S1 to Sn. Upon receiving the distributed data of the first random number data from the second secret sharing base 20, each of the cloud servers S1 to Sn stores the distributed data of the first random number data in the storage in each of the cloud servers S1 to Sn.

In addition, upon receiving the request for acquiring the distributed data of the encrypted data from the first secret sharing base 10, each of the cloud servers S1 to Sn reads the distributed data of the encrypted data from the storage and transmits the read distributed data to the first secret sharing base 10. Upon receiving the request for acquiring the distributed data of the first random number data from the second secret sharing base 20, each of the cloud servers S1 to Sn reads the distributed data of the first random number data from the storage and transmits the distributed data to the second secret sharing base 20.

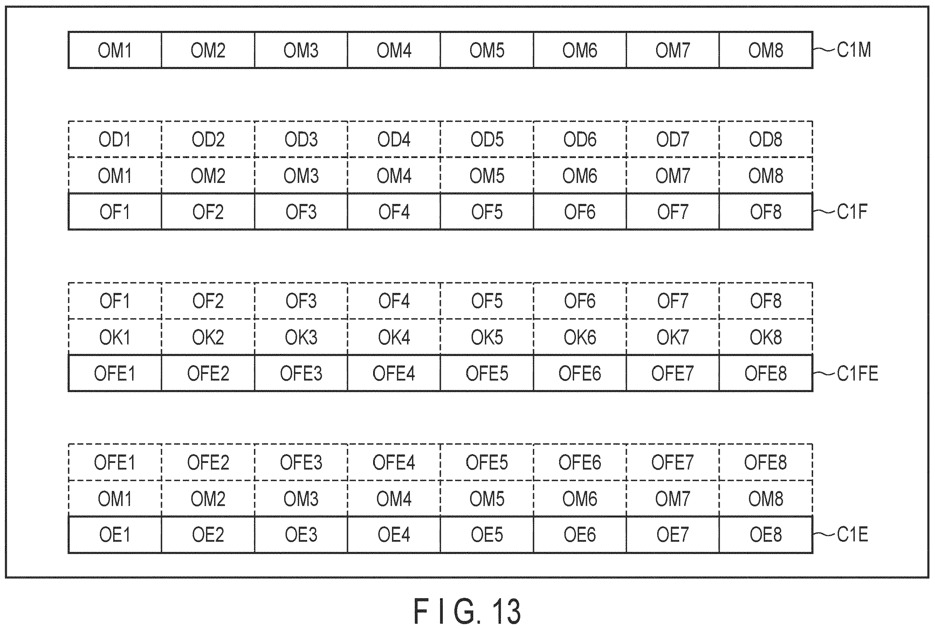

FIG. 13 is a diagram illustrating an example of the second random number data, the encrypted data encrypted with the second random number data, the double-encrypted data encrypted with first random number data, and the encrypted data obtained by decrypting the double-encrypted data regarding encryption in the secret sharing storage system according to the second embodiment.

As an example, second random number data C1M generated by the second random number generator 50 is configured by connecting, for example, eight random numbers OM1 to OM8. For example, in a case where Vernam Cipher is used, since the lengths of the original data and the second random number data illustrated in FIG. 2 are the same, each of OD1 to OD8 and each of OM1 to OM8 have the same size length.

In the user terminal C1 in the second embodiment, when the original data C1D is to be encrypted using the second random number data C1M, encrypted data C1F including encrypted data OF1 to OF8 as illustrated in FIG. 13 is generated similarly to FIG. 2. For example, the encrypted data OF1 is generated by OD1 XOR OM1.

In the proxy server 40 in the second embodiment, when double encryption processing is performed on the encrypted data C1F, double-encrypted data C1FE including double-encrypted data OFE1 to OFE8 as illustrated in FIG. 13 is generated. For example, the double-encrypted data OFF 1 is generated by the OF1 XOR OK 1.

In the first secret sharing base 10 in the second embodiment, when the double-encrypted data C1FE is to be decrypted using the second random number data C1M, for example, the encrypted data C1E is decrypted as illustrated in FIG. 13. For example, the encrypted data OE1 is generated by the OFE1 XOR OM1. In this case, since OFE1 XOR OM1 can be written as OD1 XOR OM1 XOR OK1 XOR OM1, that is, OD1 XOR OK1, the encrypted data OE1 is one encrypted data piece included in the encrypted data constituting the encrypted data C1E encrypted with the first random number data C1K. An example of the configuration of the encrypted data is not limited to the example illustrated in FIG. 13, but is limited to a case where the double-encrypted data C1FE can be decrypted with the second random number data C1M to generate the encrypted data C1E.

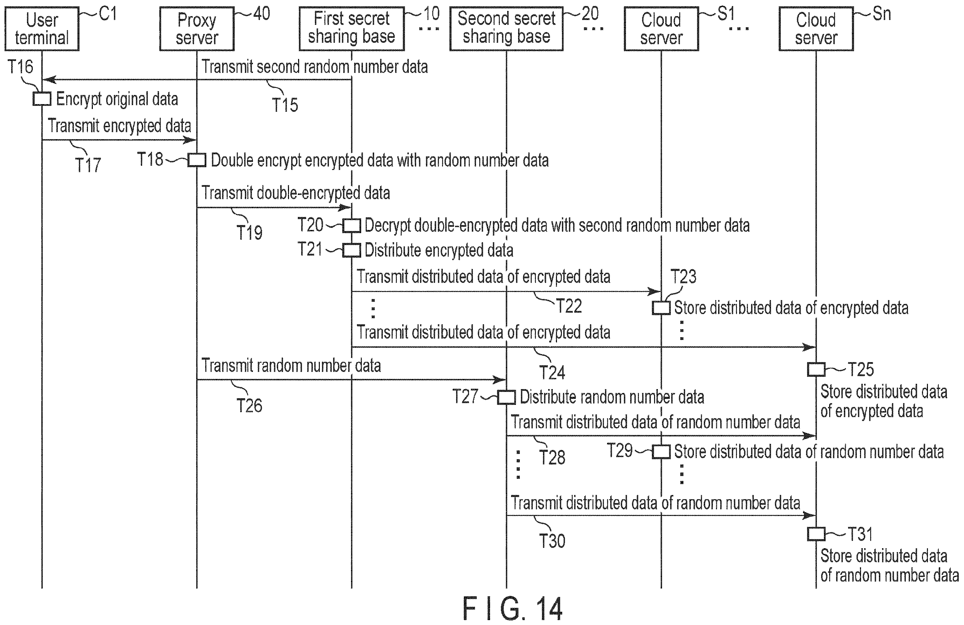

Next, a distribution processing operation of the secret sharing storage system according to the second embodiment will be described. FIG. 14 is a sequence diagram illustrating an example of an operation procedure of the distribution processing. In the description of FIG. 14, the user terminal C1 is exemplified as an example of a user terminal.

After receiving a distribution request of the user terminal C1, the first secret sharing base 10 acquires the second random number data from the second random number generator 50 and transmits the second random number data to the user terminal C1 (T15).

The user terminal C1 encrypts data (original data) held and desired to be kept secret using the second random number data received from the first secret sharing base 10 to generate encrypted data (T16). The user terminal C1 transmits the encrypted data to the proxy server 40 (T17).

The proxy server 40 acquires the first random number data from the first random number generator 30, performs the double encryption on the encrypted data received from the user terminal C1 using the first random number data, and generates double-encrypted data (T18). The proxy server 40 transmits the double-encrypted data to the first secret sharing base 10 (T19) .

The first secret sharing base 10 decrypts the double-encrypted data received from the proxy server 40 using the second random number data, and generates encrypted data encrypted with the first random number data used as a common key between the proxy server 40 and each of the cloud servers S1 to Sn (T20). The first secret sharing base 10 performs distribution processing on the generated encrypted data to generate each of n pieces of distributed data of the encrypted data and corresponding n pieces of distribution information (T21). The first secret sharing base 10 transmits the n pieces of distributed data to each of the cloud servers S1 to Sn (T22, T24). In this case, it is assumed that the first secret sharing base 10 transmits the pieces of distributed data one by one per cloud server, and randomly selects a cloud server as a storage destination of the distributed data so as to satisfy this condition. The first secret sharing base 10 stores the distribution information of the n pieces of distributed data in the storage in the first secret sharing base 10.

The cloud servers S1 to Sn store the distributed data received from the first secret sharing base 10 in the storage (T23, T25).

The proxy server 40 transmits the first random number data acquired from the first random number generator 30 to the second secret sharing base 20 (T26) .

The second secret sharing base 20 performs distribution processing on the first random number data received from the proxy server 40, and generates each of n pieces of distributed data of the first random number data and corresponding n pieces of distribution information (T27). The second secret sharing base 20 transmits the n pieces of distributed data to each of the n cloud servers S1 to Sn (T28, T30). In this case, it is assumed that the second secret sharing base 20 transmits the pieces of distributed data one by one per cloud server, and randomly selects a cloud server as a storage destination of the distributed data so as to satisfy this condition. The second secret sharing base 20 stores the distribution information of the n pieces of distributed data in the storage in the second secret sharing base 20.

The cloud servers S1 to Sn store the distributed data received from the second secret sharing base 20 in the storage (T29, T31).

Next, a restoration processing operation of the secret sharing storage system according to the second embodiment will be described. Also in this case, the user terminal C1 is exemplified as an example of the user terminal.

Each of the cloud servers S1 to Sn reads the distributed data of the first random number data from the storage, and transmits the distributed data of the first random number data to the second secret sharing base 20.

After receiving the distributed data of the first random number data from each of the cloud servers S1 to Sn, the second secret sharing base 20 reads the distribution information of the distributed data stored in the storage in the second secret sharing base 20, and performs processing of restoring the distributed data using a set of a predetermined number (threshold value) of pieces of distributed data necessary for the restoration processing and each piece of the distribution information to generate the first random number data. The second secret sharing base 20 transmits the first random number data to the proxy server 40.

Each of the cloud servers S1 to Sn reads the distributed data of the encrypted data from the storage and transmits the distributed data of the encrypted data to the first secret sharing base 10.

After receiving the distributed data of the encrypted data from each of the cloud servers S1 to Sn, the first secret sharing base 10 reads the distribution information of the distributed data stored in the storage in the first secret sharing base 10, and performs processing of restoring the distributed data using a set of a predetermined number (threshold value) of pieces of distributed data necessary for the restoration processing and each piece of the distribution information to generate the encrypted data.

The first secret sharing base 10 double encrypts the generated encrypted data using the second random number data acquired from the second random number generator 50 to generate double-encrypted data. The first secret sharing base 10 transmits the second random number data to the user terminal C1 and transmits the double-encrypted data to the proxy server 40.

The proxy server 40 restores the double-encrypted data received from the first secret sharing base 10 using the random number data received from the second secret sharing base 20, and generates encrypted data of the original data encrypted with the second random number data. The proxy server 40 transmits the generated encrypted data to the user terminal C1.

The user terminal C1 uses the second random number data received from the first secret sharing base 10 to decrypt the encrypted data received from the proxy server 40 to generate the original data.

As described above, similarly to the secret sharing storage system according to the first embodiment, also in the secret sharing storage system according to the second embodiment, the configuration can be simplified as compared with the conventional secret sharing storage system having the similar functions.

### (First Modification of Second Embodiment)

Next, a first modification of the second embodiment will be described.

In the secret sharing storage system according to the second embodiment, since the first random number data used as the common key between the proxy server 40 and the second secret sharing base 20 and the second random number data used as the common key between the user terminals C1 to Cm and the first secret sharing base 10 are distributed using a wide area network or the like, there is a risk that the common keys may be stolen by a third party. Therefore, in the first modification of the second embodiment, a secret sharing storage system that uses a network in which secure communication is guaranteed by quantum cryptographic communication at the time of distribution of a common key, and that prevents the common key from being stolen by a third party is exemplified.

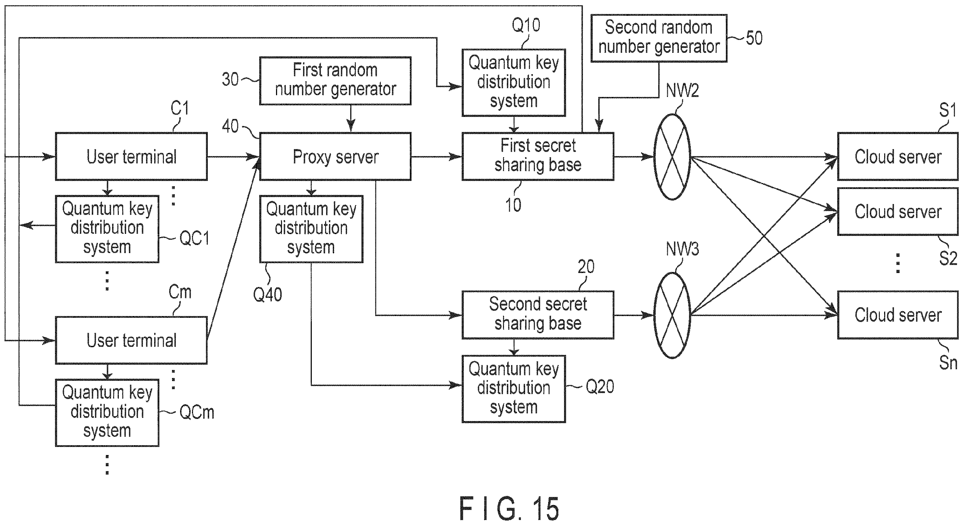

FIG. 15 is a block diagram illustrating an example of a configuration of the secret sharing storage system according to the first modification of the second embodiment. The same components as those of the secret sharing storage system according to the second embodiment in the secret sharing storage system according to the first modification of the second embodiment are denoted by the same reference signs, and the description thereof will be simplified or omitted. Differences between the secret sharing storage system according to the second embodiment and the secret sharing storage system according to the first modification of the second embodiment will be mainly described below, and description of similar parts will be omitted.

As illustrated in FIG. 15, in the secret sharing storage system according to the first modification of the second embodiment, a second secret sharing base 20 is communicably connected to a proxy server 40 via a network in which secure communication is guaranteed by quantum cryptographic communication.

Each of user terminals C1 to Cm is communicably connected to a first secret sharing base 10 via a network in which secure communication is guaranteed by quantum cryptographic communication.

The secret sharing storage system according to the first modification of the second embodiment includes quantum key distribution systems QC1 to QCm connected to the user terminals C1 to Cm, respectively, a quantum key distribution system Q40 connected to the proxy server 40, a quantum key distribution system Q10 connected to the first secret sharing base 10, and a quantum key distribution system Q20 connected to the second secret sharing base 20. The quantum key distribution system Q10 and each of the quantum key distribution systems QC1 to QCm are connected by optical fibers, and the quantum key distribution system Q40 and the quantum key distribution system Q20 are connected by an optical fiber.

In the following description, the user terminal C1 is exemplified as an example of a user terminal.

Upon acquiring second random number data used as a common key between the user terminal C1 and the first secret sharing base 10 from a second random number generator 50, the first secret sharing base 10 transmits the second random number data to the user terminal C1 via a network in which secure communication is guaranteed by quantum cryptographic communication.

Upon acquiring first random number data used as a common key between the proxy server 40 and the second secret sharing base 20 from a first random number generator 30, the proxy server 40 transmits the first random number data to the second secret sharing base 20 via a network in which secure communication is guaranteed by quantum cryptographic communication.

After restoring the distributed data of the first random number data used as the common key, the second secret sharing base 20 transmits the distributed data of the first random number data used as the common key to the proxy server 40 via a network in which secure communication is guaranteed by quantum cryptographic communication.

In the secret sharing storage system according to the first modification of the second embodiment, a network in which secure communication is guaranteed by quantum cryptographic communication is used to distribute the first random number data used as the common key between the proxy server 40 and the second secret sharing base 20 and the second random number data used as the common key between each of the user terminals C1 to Cm and the first secret sharing base 10. As a result, the distributed data of the original data can be stored without a risk that the common key may be stolen by a third party.

As described above, by simplifying the configuration of the secret sharing storage system using the cloud service, the secret sharing storage system according to each embodiment suppresses the installation cost of the secret sharing storage system and supports the secure storage of the original data to be kept secret.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A secret sharing storage system comprising:
a plurality of storage devices (S1, ... Sn);
a random number generator (30) configured to generate a random number;
a first secret sharing apparatus (10) configured to
generate n pieces of first distributed data by performing distribution processing on second data obtained by encrypting first data using the random number, the n being an integer of 2 or more, and
separately store the n pieces of first distributed data to n storage devices among the plurality of storage devices; and
a second secret sharing apparatus (20) configured to
generate n pieces of second distributed data by performing distribution processing on the random number, and
separately store the n pieces of second distributed data to n storage devices among the plurality of storage devices (S1, . . . Sn).

2. The secret sharing storage system of claim 1, wherein:
transmission and reception of the random number between a user terminal (C1, . . . Cm) and the random number generator (30) or a random number distribution device (40) are performed by quantum key encryption communication using a quantum key, the user terminal (C1, ... Cm) transmitting the second data to the first secret sharing apparatus (10) , the random number distribution device (40) distributing the random number generated by the random number generator (30), the quantum key being shared between a quantum key distribution device (QC1, ... QCm) disposed on the user terminal (C1, ... Cm) side and a quantum key distribution device (Q40) disposed on the random number generator (30) side or the random number distribution device (40) side; and
transmission and reception of the random number between the second secret sharing apparatus (20) and the random number generator (30) or the random number distribution device (40) are performed by quantum key encryption communication using a quantum key shared between a quantum key distribution device (Q20) disposed on the second secret sharing apparatus (20) side and a quantum key distribution device (Q40) disposed on the random number generator (30) side or the random number distribution device (40) side.

3. The secret sharing storage system of claim 1, further comprising:
one or more first secret sharing preliminary apparatuses (10A) having the same function as the first secret sharing apparatus (10) ; and
one or more second secret sharing preliminary apparatuses (20A) having the same function as the second secret sharing apparatus (20), wherein
each of the one or more first secret sharing preliminary apparatuses (10A) is operable as an alternative apparatus to the first secret sharing apparatus (10), and
each of the one or more second secret sharing preliminary apparatuses (20A) is operable as an alternative apparatus to the second secret sharing apparatus (20).

4. The secret sharing storage system of claim 1, wherein:
the first secret sharing apparatus (10) is further configured to
generate first information including a first identifier of the first distributed data, and a second identifier of the storage devices that store the first distributed data, and
transmit the first information to the second secret sharing apparatus (20),
the second secret sharing apparatus (20) is further configured to determine the storage devices that store the second distributed data based on the first information, and
the plurality of storage devices (S1, S2, ... Sn) are further configured to generate one of n pieces of third distributed data obtained by performing distribution processing on the first data by using the first distributed data received from the first secret sharing apparatus (10) and the second distributed data received from the second secret sharing apparatus (20).

5. The secret sharing storage system of claim 4, wherein the plurality of storage devices (S1, . . . Sn) are further configured to discard the first distributed data and the second distributed data after generating the third distributed data.

6. A secret sharing storage system comprising:
a plurality of storage devices(S1, ... Sn);
a first random number generator (30) configured to generate a first random number;
a second random number generator (50) configured to generate a second random number;
an encryption device (40) configured to
receive fourth data from a user terminal (C1, ... Cm) the fourth data being data in which third data is encrypted, and
encrypt the fourth data using the first random number to generate double-encrypted fifth data;
a third secret sharing apparatus (10) configured to
distribute the second random number generated by the second random number generator (50) to the user terminal (C1, ... Cm) as an encryption key for encrypting the third data to generate the fourth data,
generate sixth data by performing decryption corresponding to encryption of one of two encryptions performed on the fifth data using the second random number,
generate n pieces of third distributed data by performing distribution processing on the sixth data, and
separately store the n pieces of third distributed data to n storage devices among the plurality of storage devices (S1, ... Sn), the n being an integer of 2 or more; and
a fourth secret sharing apparatus (20) configured to
generate n pieces of fourth distributed data by performing distribution processing on the first random number used by the encryption device to encrypt the fourth data, and
separately store the n pieces of fourth distributed data to n storage devices among the plurality of storage devices (S1, ... Sn).

7. The secret sharing storage system of claim 6, wherein:
transmission and reception of the first random number between the encryption device (40) and the fourth secret sharing apparatus (10) are performed by quantum key encryption communication using a quantum key shared between a quantum key distribution device disposed on the encryption device side and a quantum key distribution device disposed on the fourth secret sharing apparatus side, and
transmission and reception of the second random number between the user terminal (C1, ... Cm) and the third secret sharing apparatus (10) are performed by quantum key encryption communication using a quantum key shared between a quantum key distribution device disposed on the user terminal side and a quantum key distribution device disposed on the third secret sharing apparatus side.

8. A secret sharing storage method comprising:
generating a random number by a random number generator and distributing the random number to a user terminal;
by a first secret sharing apparatus,
performing (T10) distribution processing on second data obtained by encrypting first data by the user terminal using the random number to generate n pieces of first distributed data, and
storing (T11, T13) the n pieces of first distributed data separately to n storage devices among a plurality of storage devices, the n being an integer of 2 or more; and
by a second secret sharing apparatus,
performing (T3) distribution processing on the random number to generate n pieces of second distributed data, and
storing (T4, T6) the n pieces of second distributed data separately to n storage devices among the storage devices.

9. A secret sharing storage apparatus comprising:
an input unit (40) to which a random number used for encryption of encrypted data subjected to distribution processing on n pieces of first distributed data is input, the n being an integer of 2 or more;
a distribution processing unit (20) configured to perform distribution processing on the random number to generate n pieces of second distributed data; and
a storage unit (S1, ... Sn) configured to separately store the n pieces of second distributed data to n storage devices.
